# EUROPÄISCHE PATENTANMELDUNG

(11) **EP 1 348 920 A2**
(43) Veröffentlichungstag der Anmeldung: **01.10.2003**
(21) Anmeldenummer: 03001758.6
(22) Anmeldetag: 28.01.2003
(51) Int. Cl.: F25B 29/00, F25B 41/04, F25B 5/00, F25B 6/04

(54) **Wärmepumpe zum gleichzeitigen Kühlen und Heizen**

(30) Priorität: 26.03.2002 DE 10213339
(71) Anmelder: GEA Happel Klimatechnik Produktions- und Servicegesellschaft mbH, 44625 Herne (DE)
(72) Erfinder: Altenbokum, Martin, Dr., 58300 Wetter-Esborn (DE); Kaulfuss, Ulrich, Dr., 58456 Witten (DE); Sikorski, Eugenia, Dr., 44971 Bochum (DE); Steinhoff, Norbert, 45883 Gelsenkirchen (DE)
(74) Vertreter: COHAUSZ DAWIDOWICZ HANNIG & PARTNER

(57) **Zusammenfassung**

Die Erfindung betrifft eine Wärmepumpe zum Kühlen und Heizen insbesondere zur Klimatisierung von Gebäuden oder Fahrzeugen mit folgenden im Kältemittel-Kreislauf nacheinander angeordneten Vorrichtungen: einem Verdichter (1), einem ersten Wärmetauscher (2) als Verflüssiger, einem Expansionsventil (6) und einem zweiten Wärmetauscher (5) als Verdampfer. Zwischen den zwei Wärmetauschern (2,5) ist ein dritter Wärmetauscher (4) im Kreislauf in Nachbarschaft zum Expansionsventil (6) angeordnet, der abwechselnd als Verflüssiger und als Verdampfer arbeitet, wobei in der Funktion als Verflüssiger das Expansionsventil in Fließrichtung hinter dem dritten Wärmetauscher (4) und in der Funktion als Verdampfer das Expansionsventil (6) in Fließrichtung vor dem dritten Wärmetauscher (4) angeordnet ist.

## Beschreibung

Die Erfindung betrifft eine Wärmepumpe zum Kühlen und Heizen insbesondere zur Klimatisierung von Gebäuden oder Fahrzeugen mit folgenden im Kältemittel-Kreislauf nacheinander angeordneten Vorrichtungen: einem Verdichter, einem ersten Wärmetauscher als Verflüssiger, einem Expansionsventil und einem zweiten Wärmetauscher als Verdampfer.

Es ist bekannt, Wärmepumpen zu benutzen, um Gebäude zu Kühlen und es sind Wärmepumpen bekannt, die Gebäude heizen. Ferner sind reversierbare Wärmepumpen bekannt, die entweder kühlen oder heizen, je nachdem, in welcher Jahreszeit man sich befindet. Ferner sind die bekannten Anlagen technisch aufwendig und nicht genügend effizient.

Aufgabe der Erfindung ist es, eine Wärmepumpe der eingangs genannten Art so zu verbessern, dass sie bei einfacher Konstruktion und hoher Leistungsfähigkeit ein Kühlen und Heizen sowie einen kontinuierlichen Übergang vom Kühlen zum Heizen und umgekehrt erreicht.

Diese Aufgabe wird erfindungsgemäß dadurch gelöst, dass zwischen den zwei Wärmetauschern ein dritter Wärmetauscher im Kreislauf in Nachbarschaft zum Expansionsventil angeordnet ist, der abwechselnd als Verflüssiger und als Verdampfer arbeitet, wobei in der Funktion als Verflüssiger das Expansionsventil in Fließrichtung hinter dem dritten Wärmetauscher und in der Funktion als Verdampfer das Expansionsventil in Fließrichtung vor dem dritten Wärmetauscher angeordnet ist.

Es ist kein festes Verhältnis zwischen dem Heizanteil und dem Kühlanteil vorhanden bzw. notwendig, sondern dies ist flexibel handhabbar.

Der dritte Wärmetauscher arbeitet bei größerem Wärmebedarf als Verdampfer und bei größerem Kältebedarf als Verflüssiger, gibt Wärme an die Umwelt ab oder nimmt Wärme aus der Umwelt auf und bewirkt damit eine wesentlich größere Leistungsfähigkeit der Anlage. Ein kontinuierlicher Übergang vom Kühlen zum Heizen und umgekehrt ist stets gegeben und ferner kann eine solche Anlage konstruktiv besonders einfach gestaltet sein.

Besonders vorteilhaft ist es, wenn bei der Funktion des dritten Wärmetauschers als Verflüssiger der erste Wärmetauscher außer Betrieb setzbar ist. In gleicher Weise kann bei der Funktion des dritten Wärmetauschers als Verdampfer der zweite Wärmetauscher außer Betrieb setzbar sein. Hierdurch wird erreicht, dass bei einem hohen Wärme- oder Kältebedarf zwei Verdampfer bzw. zwei Verflüssiger nicht nebeneinander in Serie oder parallel arbeiten. Bei einer parallelen Schaltung würde es zu einer geringeren Leistung oder zu einer Druckkollision und bei einer seriellen Schaltung zu einem Druckabfall kommen, so dass die Leistungsfähigkeit der Anlage wesentlich verringert würde. Durch das Abschalten des jeweiligen doppelten Verflüssigers oder Verdampfers neben dem dritten Wärmetauscher wird sichergestellt, dass der dritte Wärmetauscher und damit die gesamte Anlage mit größter Effizienz arbeitet.

Vorzugsweise wird vorgeschlagen, dass bei einem ausgeglichenen Bedarf an Wärme- und Kühlleistung der dritte Wärmetauscher außer Betrieb setzbar ist. Ferner ist konstruktiv besonders einfach, wenn zum Außerbetriebsetzen mindestens einer der Wärmetauscher insbesondere alle Wärmetauscher jeweils durch einen geschalteten Bypass umgehbar sind. Hierbei kann der dritte Wärmetauscher von Außenluft und/oder Außenwasser (Grundwasser/Flusswasser) um- und/oder durchströmt sein.

Eine konstruktiv und in der Steuerung besonders einfache Anlage wird geschaffen, wenn vor und hinter dem dritten Wärmetauscher je ein Expansionsventil angeordnet ist, von denen immer nur eines in Funktion ist.

Eine besonders sicher und ökonomisch arbeitende Anlage wird geschaffen, wenn der dritte Wärmetauscher durch Heißgas abtaubar ist, das aus dem Kältemittel-Kreislauf gewonnen wird.

Besonders vorteilhaft ist es, wenn ein Warmwasserspeicher am Wärmekreislauf zu seiner Wärmeaufnahme angeschlossen ist oder eine Wärmequelle zum Aufheizen aufweist und dass zur Abgabe der gespeicherten Wärme der Warmwasserspeicher zeitweise mit dem Kaltwasser-Kreislauf verbindbar ist. Hierdurch kann zu viel angefallene Kälte in den Fällen (I und II), dass nur Wärme oder mehr Wärme als Kälte benötigt wird, vernichtet werden. Es wird somit kurzzeitig der Fall (V) simuliert, in dem nur Kälte benötigt wird, um den dritten Wärmetauscher zu enteisen.

Um zu verhindern, dass der Kompressor durch flüssiges Kältemittel zerstört wird, wird vorgeschlagen, dass durch einen Warmwasserspeicher, der insbesondere durch eine Wärmequelle aufheizbar ist, das flüssige Kältemittel im zweiten Wärmetauscher erwärmbar ist, um in der Anlaufphase ein Verdampfen des Kältemittels im zweiten Wärmetauscher zu erreichen.

Ausführungsbeispiele der Erfindung sind in den Zeichnungen dargestellt und werden im folgenden näher beschrieben. Es zeigen
- Fig. 1: eine schematische Darstellung der Wärmepumpe,
- Fig. 2: den Fall (I), in dem nur Wärme benötigt wird,
- Fig. 3: den Fall (II), bei dem Wärme und Kälte benötigt werden, aber mehr Wärme als Kälte,
- Fig. 4: den Fall (III), in dem gleich viel Kälte und Wärme benötigt werden (ausgeglichener Zustand),
- Fig. 5: den Fall (IV), in dem Wärme und Kälte benötigt werden, aber mehr Kälte als Wärme und
- Fig. 6: den Fall (V), bei dem nur Kälte benötigt wird.

Die Wärmepumpe kann in einem Gebäude eingebaut sein und besitzt einen Kältemittel-Kreislauf, der von einem Kompressor (Verdichter) 1 angetrieben wird. Der Kompressor pumpt das Kältemittel im Kreislauf zuerst zu einem ersten Wärmetauscher 2, der als Verflüssiger (Kondensator) Wärme an einen Wärmekreislauf 3 abgibt, der durch das Gebäude geführt ist. Vom Wärmetauscher 2 fließt das Kältemittel zu einem dritten Wärmetauscher 4, der zusätzlich zu einem zweiten Wärmetauscher 5 angeordnet ist. Der dritte Wärmetauscher 4 wechselt seine Funktion und arbeitet zeitweise als Verflüssiger und zeitweise als Verdampfer. In dem Fall, in dem der dritte Wärmetauscher als Verflüssiger arbeitet, ist ein Expansionsventil 6 in Schließrichtung hinter dem dritten Wärmetauscher im Kreislauf angeordnet, und in dem Fall, in dem der dritte Wärmetauscher 4 als Verdampfer arbeitet, ist das Expansionsventil 6 vor dem dritten Wärmetauscher im Kältemittel-Kreislauf angeordnet.

Der dritte Wärmetauscher 4 nimmt bei einem großen Wärmebedarf Wärme aus der Umwelt auf und gibt bei einem großen Kältebedarf Wärme an die Umwelt ab. Im ersten Fall arbeitet der dritte Wärmetauscher als Verdampfer und im zweiten Fall als Verflüssiger. Der dritte Wärmetauscher 4 ist somit im Gegensatz zum ersten und zweiten Wärmetauscher nicht an einen Kreislauf des Gebäudes, sondern nur im Kältemittel-Kreislauf angeordnet und im übrigen von der Außenluft umströmt.

Nach Durchströmen des dritten Wärmetauschers 4 gelangt das Kältemittel zum zweiten Wärmetauscher 5, der als Verdampfer arbeitet und an einem Kühlkreislauf 7 des Gebäudes angeschlossen ist. Der Wärmetauscher 5 bzw. der Verdampfer erzeugt damit Kaltwasser zur Raumkühlung. Das durch den Wärmetauscher 5 durchflossene Kältemittel gelangt dann wieder zurück zum Verdichter 1.

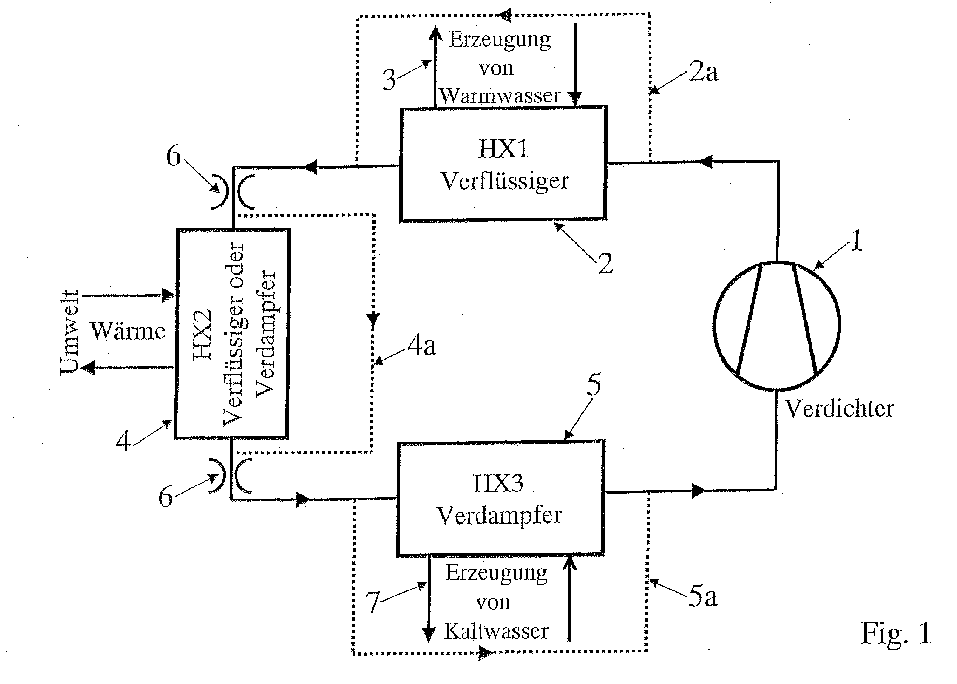

Jeder der drei Wärmetauscher 2, 3, 4 ist einzeln außer Betrieb setzbar. Hierzu ist zu jedem Wärmetauscher ein Bypass 2a, 4a und 5a angeordnet. Die hierzu erforderlichen Umschaltventile sind in Fig. 1 nicht dargestellt.

Im folgenden werden die fünf Hauptfälle I bis V dargestellt, in denen die erfindungsgemäße Anlage arbeitet. Hierbei bedeutet das Wort "mehr": Größer als die aus dem Prozess resultierende Relation und hierbei bedeutet das Wort "gleich": Identisch mit der aus dem Prozess resultierenden Relation.

### Fall I:

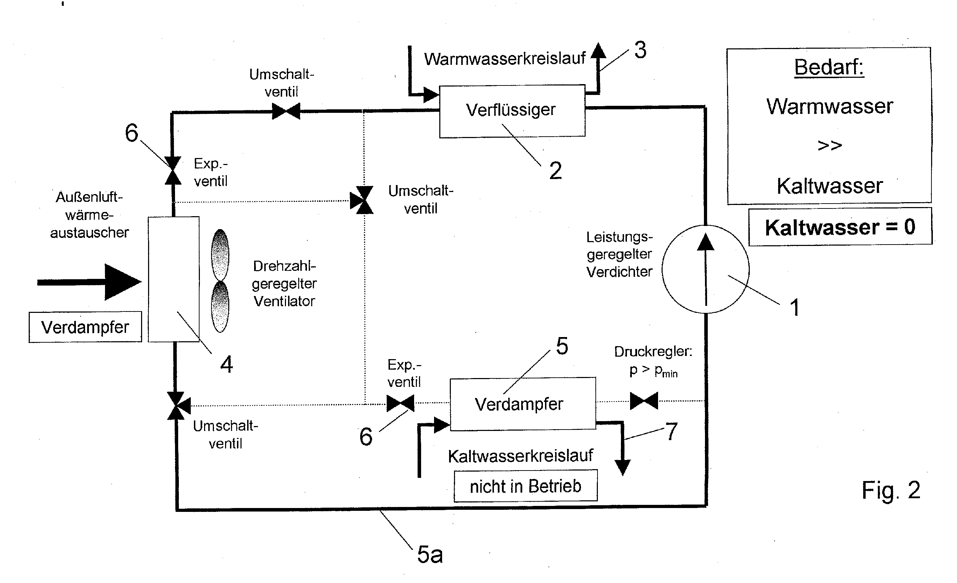

Bei diesem in Fig. 2 dargestellten Fall wird nur Wärme (insbesondere für das Gebäude) benötigt. Der zweite Wärmetauscher 5 ist abgeschaltet, in dem er vom Bypass 5a umflossen wird. Hierdurch fördert der Verdichter 1 das Kältemittel zum als Verflüssiger arbeitenden Wärmetauscher 2, der den Wärmekreislauf 3 bedient. Vom Wärmetauscher 2 gelangt das Kältemittel über das Expansionsventil 6 zum dritten Wärmetauscher 4, der als Verdampfer arbeitet und Wärme von der Außenluft aufnimmt. Danach gelangt das Kältemittel über den Bypass 5a zurück zum Verdichter. Somit wird in diesem Fall der zweite Wärmetauscher 5 durch den dritten Wärmetauscher 4 ersetzt, der Wärme von der Außenluft aufnimmt.

### Fall II:

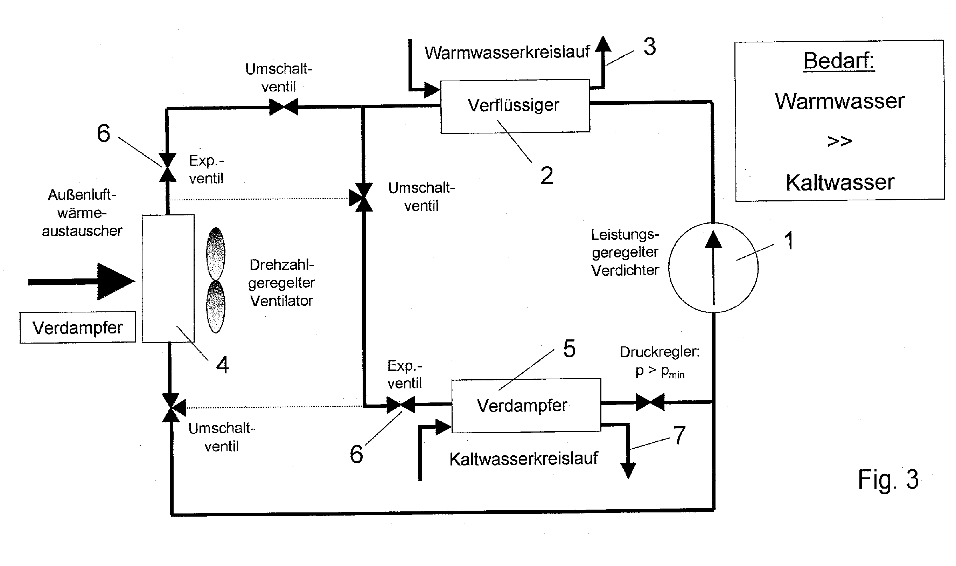

Bei diesem in Fig. 3 dargestellten Fall werden Wärme und Kälte benötigt, aber zur Zeit mehr Wärme als Kälte. Es sind alle drei Wärmetauscher im Einsatz und der dritte Wärmetauscher 4 arbeitet als zusätzlicher Verdampfer und nimmt Wärme von der Außenluft auf. Der erste Wärmetauscher 2 erzeugt Warmwasser und der zweite Wärmetauscher 5 Kaltwasser. Stattdessen können aber auch die beiden Wärmetauscher 4 und 5 abwechselnd durch Umschalten im Einsatz sein, je nach Bedarf (Puls/Pause-Verhältnis).

### Fall III:

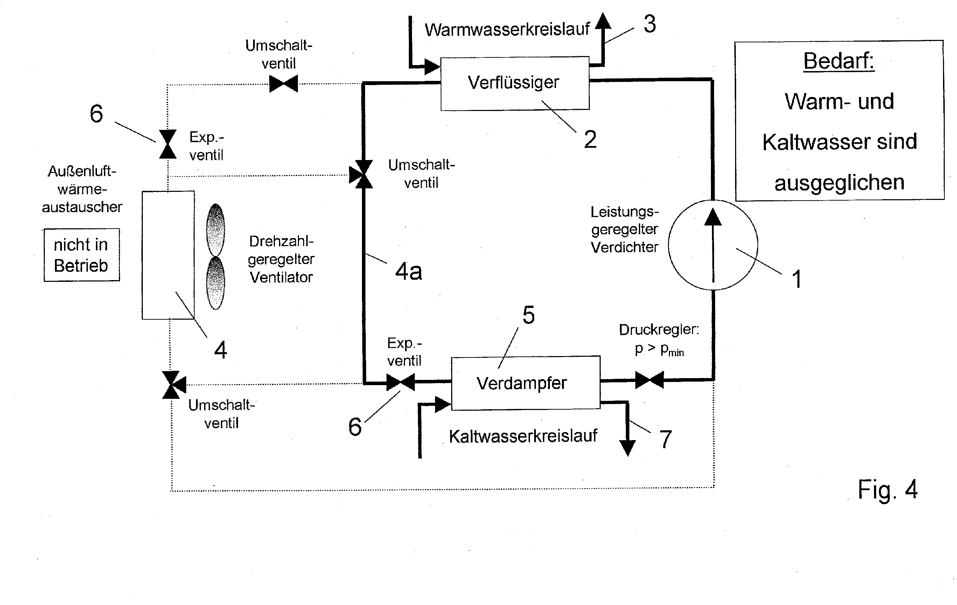

Bei diesem in Fig. 4 dargestellten Fall werden Wärme und Kälte benötigt, aber zur Zeit gleich viel Kälte wie Wärme, das heißt es besteht ein ausgeglichener Zustand. In diesem normalerweise nur sehr selten auftretenden Fall wird der dritte Wärmetauscher 4 nicht benötigt, so dass das Kältemittel den dritten Wärmetauscher 4 nicht durchfließt, sondern durch einen Bypass 4a umfließt. Der erste Wärmetauscher 2 erzeugt Warmwasser und der zweite Wärmetauscher 5 Kaltwasser.

### Fall IV:

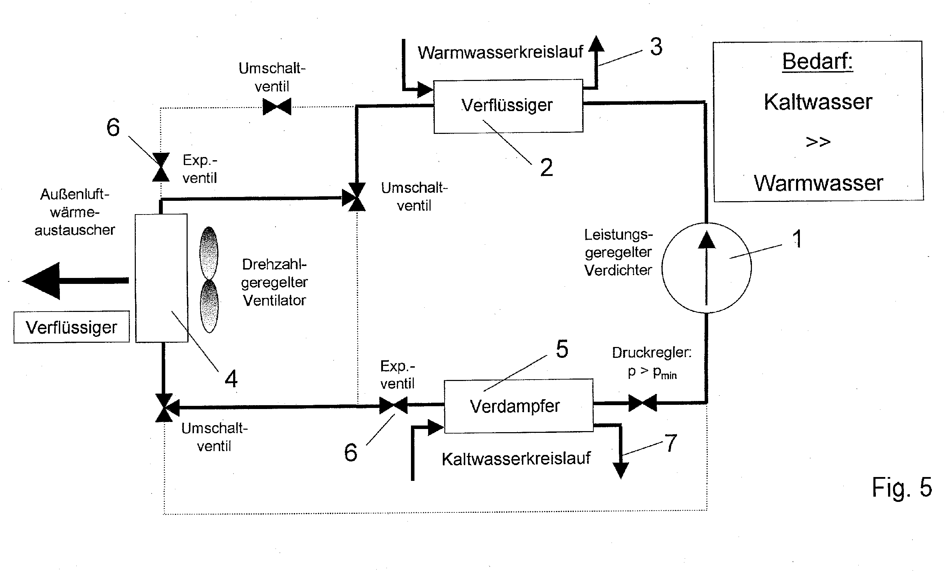

Bei diesem in Fig. 5 dargestellten Fall werden Wärme und Kälte benötigt, aber mehr Kälte als Wärme. Hier arbeiten dann wiederum alle drei Wärmetauscher gleichzeitig, wobei der dritte Wärmetauscher 4 als zusätzlicher Verflüssiger arbeitet und Wärme an die Außenluft abgibt. Der erste Wärmetauscher 2 erzeugt Warmwasser und der zweite Wärmetauscher 5 Kaltwasser. Stattdessen können aber auch die beiden Wärmetauscher 4 und 5 abwechselnd durch Umschalten im Einsatz sein, je nach Bedarf (Puls/Pause-Verhältnis).

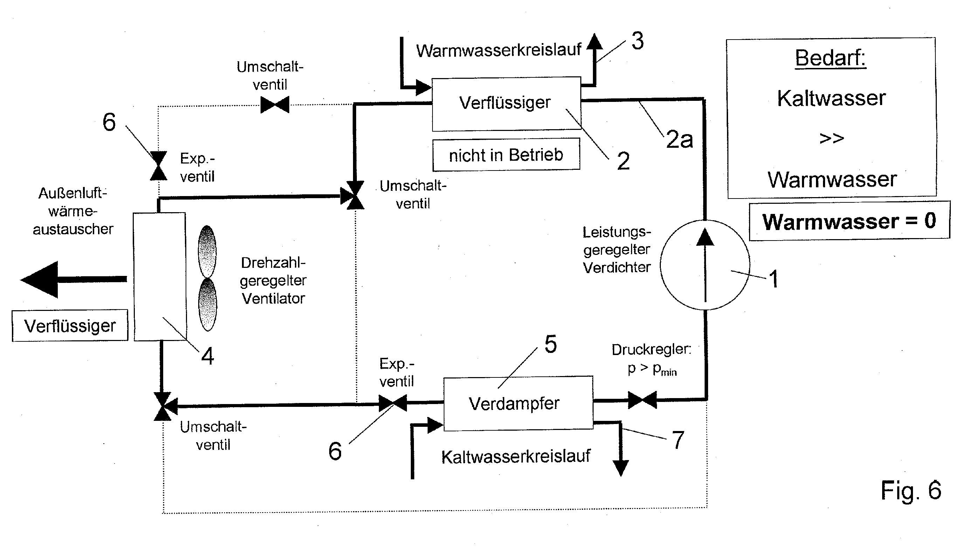

Fall V:
Bei diesem in Fig. 6 dargestellten Fall wird nur Kälte benötigt. Der erste Wärmetauscher 2 ist durch Einschaltung des Bypasses 2a ausgeschaltet und der zweite Wärmetauscher 5 erzeugt Kaltwasser. Der dritte Wärmetauscher 4 arbeitet als Verflüssiger und gibt Wärme an die Außenluft ab.

In den obigen Beschreibungen der einzelnen Fälle wurde stets von Außenluft gesprochen. Dies kann aber auch Außenwasser, das heißt Grundwasser oder Flusswasser sein, da es nur darum geht, Wärme von der Umwelt aufzunehmen bzw. an diese abzugeben. Auch wird in den obigen Ausführungsbeispielen von dem Heizen oder Kühlen eines Gebäudes gesprochen. Stattdessen kann die Wärme bzw. die Kühlung auch zu anderen Zwecken, zum Beispiel in der Industrie oder in Fahrzeugen verwendet werden.

Die folgende Tabelle zeigt die fünf unterschiedlichen Fälle I bis V:

| **benötigt** | **HX1 Verflüssiger** | **HX2 wechselnd** | **HX3 Verdampfer** |
|---|---|---|---|
| I nur Wärme (z.B. im tiefen Winter) | durchströmt | durchströmt als Verdampfer | nicht durchströmt |
| II Wärme + Kälte, aber relativ mehr Wärme als Kälte (z.B. Frühling, Herbst) | durchströmt | durchströmt als Verdampfer | durchströmt |
| III ausgeglichen, relativ gleich viel Wärme und Kälte | durchströmt | nicht durchströmt | durchströmt |
| IV Wärme + Kälte, aber relativ mehr Kälte als Wärme (z.B. Frühling, Herbst) | durchströmt | durchströmt als Verflüssiger | durchströmt |
| V nur Kälte (z.B. im Hochsommer) | nicht durchströmt | durchströmt als Verflüssiger | durchströmt |

Das Umschalten von einem Fall bzw. Zustand zum anderen erfolgt durch eine automatische Steuerung einer Regelungsanlage, die zumindest die Innen- und Außentemperaturen misst.

Weitere Ausführungen und Erweiterungen werden im folgenden beschrieben.
■ Der dritte Wärmespeicher 4 kann durch Heißgas abtaubar sein, das aus dem Kältemittel-Kreislauf gewonnen wird.
■ Ein Warmwasserspeicher kann am Wärmekreislauf 3 zu seiner Wärmeaufnahme angeschlossen sein oder eine Wärmequelle zum Aufheizen aufweisen und es kann zur Abgabe der gespeicherten Wärme der Warmwasserspeicher zeitweise mit dem Kaltwasser-Kreislauf verbindbar sein.
■ Durch einen Warmwasserspeicher, der insbesondere durch eine Wärmequelle aufheizbar ist, kann das flüssige Kältemittel im zweiten Wärmetauscher 2 erwärmbar sein, um in der Anlaufphase ein Verdampfen des Kältemittels im zweiten Wärmetauscher 2 zu erreichen.

## Patentansprüche

1. Wärmepumpe zum Kühlen und Heizen insbesondere zur Klimatisierung von Gebäuden oder Fahrzeugen mit folgenden im Kältemittel-Kreislauf nacheinander angeordneten Vorrichtungen: einem Verdichter (1), einem ersten Wärmetauscher (2) als Verflüssiger, einem Expansionsventil (6) und einem zweiten Wärmetauscher (5) als Verdampfer, **dadurch gekennzeichnet, dass** zwischen den zwei Wärmetauschern (2, 5) ein dritter Wärmetauscher (4) im Kreislauf in Nachbarschaft zum Expansionsventil (6) angeordnet ist, der abwechselnd als Verflüssiger und als Verdampfer arbeitet, wobei in der Funktion als Verflüssiger das Expansionsventil in Fließrichtung hinter dem dritten Wärmetauscher (4) und in der Funktion als Verdampfer das Expansionsventil (6) in Fließrichtung vor dem dritten Wärmetauscher (4) angeordnet ist.

2. Wärmepumpe nach Anspruch 1, **dadurch gekennzeichnet, dass** bei der Funktion des dritten Wärmetauschers (4) als Verflüssiger der erste Wärmetauscher (2) außer Betrieb setzbar ist.

3. Wärmepumpe nach Anspruch 1 oder 2, **dadurch gekennzeichnet, dass** bei der Funktion des dritten Wärmetauschers (4) als Verdampfer der zweite Wärmetauscher (5) außer Betrieb setzbar ist.

4. Wärmepumpe nach einem der vorherigen Ansprüche, **dadurch gekennzeichnet, dass** bei einem ausgeglichenen Bedarf an Wärmeund Kühlleistung der dritte Wärmetauscher (4) außer Betrieb setzbar ist.

5. Wärmepumpe nach einem der vorherigen Ansprüche, **dadurch gekennzeichnet, dass** zum Außerbetriebsetzen mindestens einer der Wärmetauscher insbesondere alle Wärmetauscher (2, 4, 5) jeweils durch einen geschalteten Bypass (2a, 4a, 5a) umgehbar sind.

6. Wärmepumpe nach einem der vorherigen Ansprüche, **dadurch gekennzeichnet, dass** der dritte Wärmetauscher (4) von Außenluft und/oder Außenwasser (Grundwasser/Flusswasser) um- und/oder durchströmt ist.

7. Wärmepumpe nach einem der vorherigen Ansprüche, **dadurch gekennzeichnet, dass** vor und hinter dem dritten Wärmetauscher (4) je ein Expansionsventil (6) angeordnet ist, von denen immer nur eines in Funktion ist.

8. Wärmepumpe nach einem der vorherigen Ansprüche, **dadurch gekennzeichnet, dass** der dritte Wärmetauscher (4) durch Heißgas abtaubar ist, das aus dem Kältemittel-Kreislauf gewonnen wird.

9. Wärmepumpe nach einem der vorherigen Ansprüche, **dadurch gekennzeichnet, dass** ein Warmwasserspeicher am Wärmekreislauf (3) zu seiner Wärmeaufnahme angeschlossen ist oder eine Wärmequelle zum Aufheizen aufweist und dass zur Abgabe der gespeicherten Wärme der Warmwasserspeicher zeitweise mit dem Kaltwasser-Kreislauf verbindbar ist.

10. Wärmepumpe nach einem der vorherigen Ansprüche, **dadurch gekennzeichnet, dass** durch einen Warmwasserspeicher, der insbesondere durch eine Wärmequelle aufheizbar ist, das flüssige Kältemittel im zweiten Wärmetauscher (2) erwärmbar ist, um in der Anlaufphase ein Verdampfen des Kältemittels im zweiten Wärmetauscher (2) zu erreichen.
